# EUROPEAN PATENT APPLICATION

(11) **EP 4 369 111 A1**
(43) Date of publication of application: **15.05.2024**
(21) Application number: 22842278.8
(22) Date of filing: 30.05.2022
(51) Int. Cl.: G03H 1/02, G03H 1/04

(54) **HOLOGRAPHIC INTERFERENCE PATTERN RECORDING APPARATUS AND RECORDING METHOD USING SAME**

(30) Priority: 15.07.2021 KR 20210092621
(71) Applicant: LG Chem, Ltd., Yeongdeungpo-gu Seoul 07336 (KR)
(72) Inventor: SONG, Min Soo, Daejeon 34122 (KR); KIM, Sung Yeon, Daejeon 34122 (KR); YOO, Yeon Jae, Daejeon 34122 (KR); LEE, Joon Young, Daejeon 34122 (KR)
(74) Representative: Hoffmann Eitle
(86) International application number: PCT/KR2022/007640
(87) International publication number: WO 2023/287015

(57) **Abstract**

Proposed are an apparatus for recording a holographic interference pattern and a method of recording a holographic interference pattern using the apparatus, the apparatus and the method being capable of simplifying a process of aligning a light source and a photosensitive material in order to record a holographic interference pattern on a three-dimensional coordinate system and then realigning the light source and the photosensitive material in order to record a different holographic interference pattern.

## Description

### Technical Field

The present disclosure claims priority to and the benefit of Korean Patent Application No. 10-2021-0092621 filed in the Korean Intellectual Property Office on July 15, 2021, the entire contents of which are incorporated herein by reference. The present disclosure relates to an apparatus for recording a holographic interference pattern and a method of recording a holographic interference pattern using the apparatus and, particularly, to an apparatus for recording a holographic interference pattern and a method of recording a holographic interference pattern using the apparatus, the apparatus and the method being capable of simplifying a process of aligning a light source and a photosensitive material in order to record a holographic interference pattern on a three-dimensional coordinate system and then realigning the light source and the photosensitive material in order to record a different holographic interference pattern.

### Background Art

Usually, in order to record a holographic interference pattern on a photosensitive material, object light and reference light are emitted to the photosensitive material, and thus an interference pattern realized due to a phenomenon of interference between the object light and the reference light is recorded on the photosensitive material.

In order to record a specific holographic interference pattern, an emission angle at which the object light and the reference light are emitted at the photosensitive material is required to be adjusted. Thus, the object light, the reference light, and the photosensitive material need to be aligned at specific positions, respectively.

That is, in order to be used in an apparatus for recording a holographic interference pattern, the photosensitive material is required to have a specific shape. Usually, in a state where the photosensitive material having a specific shape is used in the apparatus, the holographic interference pattern is recorded on the photosensitive material. However, in a case where the holographic interference pattern is recorded in the state where the photosensitive material having the specific shape is used in the apparatus, there occurs a problem in that in most cases, the object light, the reference light, and the photosensitive material are required to be positioned on a three-dimensional coordinate system and in that the object light, the reference light, and the photosensitive material are difficult to arrange on the three-dimensional coordinate system. Furthermore, in a process of duplicating the holographic interference pattern recorded on the photosensitive material, a path for diffraction light resulting from reproduction light being diffracted by the holographic interference pattern is also realized on a three-dimensional coordinate system. Therefore, there occurs a problem in that the path for the diffraction light is difficult to identify and in that paths for the object light and the reference light for recording the holographic interference pattern are also difficult to derive by identifying the path for the diffraction light.

Furthermore, in order to duplicate the finely changed holographic interference pattern, in the state where the photosensitive material having the specific shape is used in the apparatus, a three-dimensional arrangement of the object light, the reference light, and the photosensitive material is required to be changed. Therefore, there occurs a problem in that it takes excessive time to align the object light, the reference light, and the photosensitive material.

Therefore, there has been an urgent need to develop a technology that can easily realize an arrangement of the object light, the reference light, and the photosensitive material although the holographic interference pattern is changed.

### DISCLOSURE

### Technical Problem

An object of the present disclosure is to provide an apparatus for recording a holographic interference pattern and a method of recording a holographic interference pattern using the apparatus, the apparatus and the method being capable of changing a three dimensional arrangement of optical paths formed by diffraction light to a two-dimensional arrangement thereof by emitting reproduction light to a photosensitive material on which a holographic interference pattern is to be recorded and then of deriving an arrangement of reference light and object light that correspond to the reproduction light and the diffraction light, respectively. With the apparatus and the method, an arrangement of the object light, the reference light, and the photosensitive material can be easily changed although the holographic interference pattern to be recorded is changed.

However, the present disclosure is not limited to the above-mentioned object, an object not mentioned would be clearly understandable, from the following description, to a person of ordinary skill in the art.

### Technical Solution

According to an aspect of the present disclosure, there is provided a method of recording a holographic interference pattern, the method including: identifying optical paths formed by a path for reproduction light and a path for diffraction light, respectively, by emitting the reproduction light at a predetermined position to a photosensitive material sample on which a first holographic interference pattern is recorded; arranging the optical paths on a two-dimensional coordinate system by rotating the photosensitive material sample; deriving a path for reference light and a path for object light in such a manner as to record a second holographic interference pattern that realizes optical paths that are the same as the optical paths arranged on the two-dimensional coordinate system; and providing a photosensitive material on which the second holographic interference pattern is to be recorded, providing the reference light and the object light at predetermined positions, respectively, on the path for the reference light and the path for the object light, emitting the reference light and the object light, and thus recording the second holographic interference pattern.

According to another aspect of the present disclosure, there is provided an apparatus for recording a holographic interference pattern, the apparatus including: a photosensitive material fixation unit configured to fix a photosensitive material on which a second holographic interference pattern, realizing optical paths that are the same as optical paths realized by a first holographic interference pattern recorded on a photosensitive material sample, is to be recorded; a reference light emission unit configured to emit reference light to the photosensitive material; an object light emission unit configured to emit object light to the photosensitive material; a stage unit to which the photosensitive material fixation unit, the reference light emission unit, and the object light emission unit are fixed after being arranged at predetermined positions, respectively; and a computation unit configured to derive the predetermined positions, wherein the second holographic interference pattern formed due to a phenomenon of interference between the reference light and the object light is recorded on the photosensitive material.

### Advantageous Effects

The method of recording a holographic interference pattern according to a first embodiment of the present disclosure can convert an arrangement of the object light and the reference light in accordance with the holographic interference pattern that is to be recorded, that is, in accordance with optical paths that are to be realized, into a two-dimensional arrangement, and thus, although the holographic interference pattern is changed, can easily change respective positions of the reference light, the object light and the photosensitive material.

The apparatus for recording a holographic interference pattern according to a second embodiment of the present disclosure can easily change respective positions of the reference light, the object light, and the photosensitive material although the holographic interference pattern that is to be recorded is changed, that is, although optical paths that are to be realized are changed, and thus can simplify a process of recording the holographic interference pattern.

The present disclosure is not limited to the above-mentioned advantageous effects. An advantageous effect not mentioned above would be apparent, from the present specification and the accompanying drawings, to a person of ordinary skill in the art.

### Brief Description of Drawings

FIG. 1 is a flowchart illustrating a method of recording a holographic interference pattern according to a first embodiment of the present disclosure.
FIG. 2 is a schematic diagram illustrating the method of recording a holographic interference pattern according to the first embodiment of the present disclosure.
FIG. 3 is a plan view illustrating an apparatus for recording a holographic interference pattern according to a second embodiment of the present disclosure.
FIG. 4 is a perspective view illustrating the apparatus for recording the holographic interference pattern according to the second embodiment of the present disclosure.

### [Reference Sign List]

1: photosensitive material sample
1': photosensitive material sample rotated for arrangement
3: reproduction light
3': reproduction light arranged on the two-dimensional coordinate system
3s: starting position of the reproduction light
3s': starting position of the reproduction light arranged on the two-dimensional coordinate system
5: diffraction light
5': diffraction light arranged on the two-dimensional coordinate system
5t: ending point of the diffraction light
5t': ending point of the diffraction light arranged on the two-dimensional coordinate system
Θ: angle between the reference light and the object light
Φ: angle between the reproduction light and the diffraction light
O : origin
10: photosensitive material
10': photosensitive material rotated for arrangement
30: reference light
30s: starting point of the reference light
50: object light
50s: starting point of the object light
50t: ending point of the the object light
100: photosensitive material fixation unit
300: reference light emission unit
500: object light emission unit
600: computation unit
700: stage unit
800: controller
900: marker
1000: apparatus for recording the holographic interference pattern

### Best Mode for Carrying Out the Invention

With reference to the accompanying drawings, embodiments of the present disclosure will be described in detail below in sufficient detail to enable a person skilled in the art to practice the disclosure. However, the present disclosure is not limited to the embodiments that will be disclosed below and can be implemented in various different forms. The embodiments are only provided to make the present disclosure complete and to provide definite notice as to the scope of the present disclosure to a person of ordinary skill in the art to which the present disclosure pertains. The scope of the present disclosure should be only defined by claims. Throughout the present specification, the terms that are used for describing the embodiments do not impose any limitation on the present disclosure.

Unless specified otherwise throughout the present specification, a singular noun or a singular noun phrase may have a plural meaning.

The terms "comprise" and/or "comprising" are used throughout the present specification to indicate that a named constituent element, step, operation, and/or element is present, without precluding the presence or addition of one or more other constituent elements, steps, operations, and/or elements. Unless specifically stated otherwise, these terms mean that another constituent element may further be included, but not excluded.

Throughout the present specification, a constituent element, when expressed as being positioned "on" a different constituent, is meant to be in contact with the different constituent. A constituent element, when expressed as being positioned "over" a different constituent, is meant to be over the different constituent with a third constituent element in between.

Throughout the present specification, the expression "A and/or B" means "A and B, or A or B."

Throughout the present specification, a "holographic lattice pattern" means a holographic lattice pattern that is generated by alternately arranging a high refractive portion and a low refractive portion along a predetermined direction. Light reaching a holographic optical element is diffracted, and thus an optical path may be changed. A plurality of laser beams interfere with a photosensitive material, such as photopolymer, and thus the holographic lattice pattern may be recorded. The holographic optical element can be understood as a structure that is arranged on one surface or the other surface of a light guide and changes the optical path by diffracting light at an optical guide.

Throughout the present specification, the term "lengthwise direction of holographic lattice pattern" may be defined as a direction perpendicular to a direction in which the high refractive portion and the lower refractive portions are alternately arranged in a row.

Throughout the present specification, "recording" may involve duplicating by recording a holographic interference pattern, recorded on a photosensitive material sample, on a photosensitive material.

Throughout the present specification, the term "optical path" may mean a path along which reproduction light and diffraction light, which results from the reproduction light being diffracted by the holographic interference pattern, travel in a case where the reproduction light is emitted to an optical element on which the holographic interference pattern is recorded.

Embodiments of the present disclosure will be described in more detail below.

The method of recording a holographic interference pattern according to the first embodiment of the present disclosure includes identifying optical paths formed by a path for reproduction light and a path for diffraction light, respectively, by emitting the reproduction light at a predetermined position to a photosensitive material sample on which a first holographic interference pattern is recorded; arranging the optical paths on a two-dimensional coordinate system by rotating the photosensitive material sample; deriving a path for reference light and a path for object light in such a manner as to record a second holographic interference pattern that realizes optical paths that are the same as the optical paths arranged on the two-dimensional coordinate system, and providing a photosensitive material on which the second holographic interference pattern is to be recorded, providing the reference light and the object light at predetermined positions, respectively, on the path for the reference light and the path for the object light, emitting the reference light and the object light, and thus recording the second holographic interference pattern.

According to the first embodiment of the present disclosure, the arranging of the optical paths on the two-dimensional coordinate system is to designate as the origin a point where the reproduction light meets with the photosensitive material sample on the two-dimensional coordinate system.

According to the first embodiment of the present disclosure, the recording of the second holographic interference pattern is to provide the photosensitive material on which the second holographic interference pattern is to be recorded, in such a manner that the photosensitive material is aligned in the same manner as the photosensitive material sample rotated for arrangement.

The apparatus of recording a holographic interference pattern according to the second embodiment of the present disclosure includes a photosensitive material fixation unit configured to fix a photosensitive material on which a second holographic interference pattern, realizing optical paths that are the same as optical paths realized by a first holographic interference pattern recorded on a photosensitive material sample, is to be recorded; a reference light emission unit configured to emit reference light to the photosensitive material; an object light emission unit configured to emit object light to the photosensitive material; a stage unit to which the photosensitive material fixation unit, the reference light emission unit, and the object light emission unit are fixed after being arranged at predetermined positions, respectively; and a computation unit configured to derive the predetermined positions, wherein the second holographic interference pattern formed due to a phenomenon of interference between the reference light and the object light is recorded on the photosensitive material.

According to the second embodiment of the present disclosure, the computation unit derives the predetermined positions by performing: emitting at a predetermined position reproduction light to the photosensitive material sample on which the first holographic interference pattern is recorded and thus identifying optical paths formed by a path for the reproduction light and a path for diffraction light; arranging the optical paths on a two-dimensional coordinate system by rotating the photosensitive material sample; and deriving a path for the reference light and a path for the object light in such a manner as to record the second holographic interference pattern realizing optical paths that are the same as the optical paths arranged on the two-dimensional coordinate system.

According to the second embodiment of the present disclosure, the photosensitive material fixation unit rotates the photosensitive material in such a manner that the photosensitive material is aligned in the same manner as the photosensitive material sample rotated for arrangement.

According to the second embodiment of the present disclosure, further comprising a controller connected to each of the photosensitive material fixation unit, the reference light emission unit, and the object light emission unit and configured to move each of the photosensitive material fixation unit, the reference light emission unit, and the object light emission unit in such a manner as to be arranged at the predetermined positions, respectively.

According to the second embodiment of the present disclosure, the stage unit comprises: a marker on which the path for the reproduction light and the path for the diffraction light are each marked.

### Mode for Invention

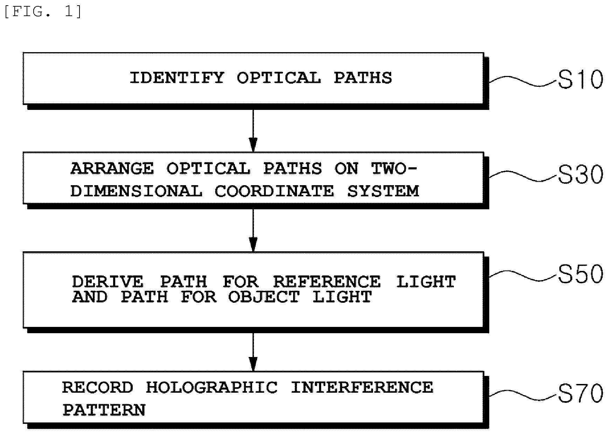

FIG. 1 is a flowchart illustrating a method of recording a holographic interference pattern according to a first embodiment of the present disclosure. The method of recording a holographic interference pattern according to the first embodiment of the present disclosure is provided with reference to FIG. 1. The method includes Step S10 of identifying optical paths formed by a path for reproduction light 3 and a path for diffraction light 5, respectively, by emitting the reproduction light 3 at a predetermined position to a photosensitive material sample 1 on which a first holographic interference pattern is recorded; Step S30 of arranging the optical paths on a two-dimensional coordinate system by rotating the photosensitive material sample 1; Step S50 of deriving a path for reference light 30 and a path for object light 50 in such a manner as to record a second holographic interference pattern that realizes optical paths that are the same as the optical paths 3' and 5' arranged on the two-dimensional coordinate system; and Step S70 of providing a photosensitive material 10 on which the second holographic interference pattern is to be recorded, providing the reference light 30 and the object light 50 at predetermined positions, respectively, on the path for the reference light 30 and the path for the object light 50, emitting the reference light 30 and the object light 50, and thus recording the second holographic interference pattern.

In the method of recording a holographic interference pattern according to the first embodiment of the present disclosure, an arrangement of the object light 50 and the reference light 30 in accordance with the holographic interference pattern to be recorded, that is, with the optical paths to be realized is two-dimensionally converted. Thus, although the holographic interference pattern is changed, respective positions of the reference light 30, the object light 50, and the photosensitive material 10 may be easily changed.

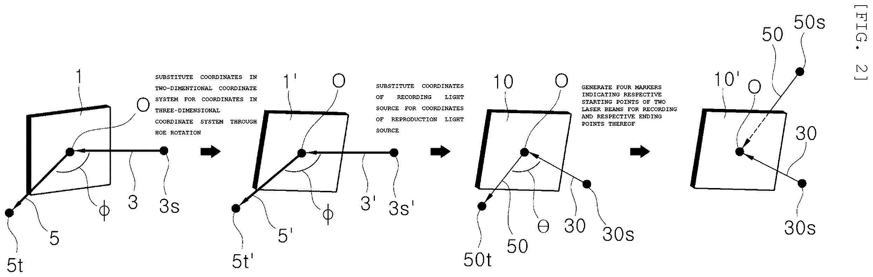

FIG. 2 is a schematic diagram illustrating the method of recording a holographic interference pattern according to the first embodiment of the present disclosure. The method of recording a holographic interference pattern is described in detail with reference to FIG. 2.

The method of recording a holographic interference pattern according to the first embodiment of the present disclosure includes Step S10 of emitting at a predetermined position 3s the reproduction light 3 to the photosensitive material sample 1 on which the first holographic interference pattern is recorded and thus identifying the optical paths formed by the path for the reproduction light 3 and the path for the diffraction light 5. Specifically, the reproduction light 3 is positioned at a starting position 3s of the reproduction light, which is a predetermined position, and is emitted to the photosensitive material sample 1, and the path for the reproduction light 3 and the path for the diffraction light 5 that is diffracted by the first holographic interference pattern recorded on the photosensitive material sample 1 are identified. As described above, the method of recording a holographic interference pattern includes Step S10 of emitting at the predetermined position the reproduction light 3 to the photosensitive material sample 1 on which the first holographic interference pattern is recorded and thus identifying the optical paths formed by the path for the reproduction light 3 and the path for the diffraction light 5. Accordingly, in order to record the first holographic interference pattern, the corresponding path for the object light 50 and the corresponding path for the reference light 30 may be identified. Accordingly, a starting point 50s of the object light and a starting point 30s of the reference light may be identified.

According to the first embodiment of the present disclosure, the photosensitive material sample 1 on which the first holographic interference pattern is recorded may be a photosensitive material sample having the shape of a curved surface or the shape of a flat surface. Specifically, although the reproduction light 3 is emitted at the same position to the photosensitive material sample having a different shape on which the same first holographic interference pattern is recorded, the path for the diffraction light 5 is realized differently. Therefore, in a case where the second holographic interference pattern that realizes optical paths that are the same as the optical paths is recorded, it is desirable that a shape of the photosensitive material sample 1 on which the first holographic interference pattern is recorded is accurately specified and that optical paths formed by the path for the reproduction light 3 and the path for the diffraction light 5 are identified. As described above, the photosensitive material sample having the shape of a curved surface or the shape of a flat surface is used as the photosensitive material sample 1 on which the first holographic interference pattern is recorded. Thus, the paths for the reference light 30 and the object light 50 that are emitted for recording may be accurately derived.

Throughout the present specification, the expression "having the shape of a curved surface" may mean that one surface of the photosensitive material is curved, that is, non-flat or may mean that opposite surfaces of the photosensitive material that include the one surface thereof and the other surface opposite in direction to the one surface are curved, that is, non-flat.

Throughout the present specification, the expression "having the shape of a flat surface" may mean that one surface of the photosensitive material is one portion of a surface that is flat and extends infinitely or may mean that opposite surfaces of the photosensitive material that include the one surface thereof and the other surface opposite in direction to the one surface are respective portions of surfaces that are flat and extend infinitely.

According to the first embodiment of the present disclosure, the photosensitive material on which the second holographic interference pattern is to be recorded may be a photosensitive material having the shape of a curved surface or the shape of a flat surface. That is, the photosensitive material on which the second holographic interference pattern that realizes the optical paths that are the same as the optical paths is to be recorded may be a photosensitive material having the shape of a curved surface or the shape of a flat surface. Specifically, the photosensitive material needs to have the shape of a curved surface or the shape of a flat surface, depending on an apparatus in which the photosensitive material is used. Therefore, it is desirable that a shape of the photosensitive material on which the second holographic interference pattern is to be recorded is selected depending on an apparatus in which the photosensitive material on which the second holographic interference pattern is to be recorded is used. As described above, the shape of the photosensitive material on which the second holographic interference pattern is to be recorded may be realized as the shape of a curved surface or the shape of a flat surface. Thus, the photosensitive material may find application in various apparatuses.

According to the first embodiment of the present disclosure, in a case where the photosensitive material sample on which the first holographic interference pattern is recorded has the shape of a curved surface, the photosensitive material on which the second holographic interference pattern is to be recorded may have the shape of a curved surface. Moreover, in a case where the photosensitive material sample on which the first holographic interference pattern is recorded has the shape of a flat surface, the photosensitive material on which the second holographic interference pattern is to be recorded may have the shape of a flat surface. As described above, the photosensitive material sample on which the first holographic interference pattern is recorded and the photosensitive material on which the second holographic interference pattern is to be recorded are realized in such a manner as to have the same shape. Thus, the second holographic interference pattern may be easily recorded in such a manner that the optical paths realized by the first holographic interference pattern in the photosensitive material sample are realized with the photosensitive material on which the second holographic interference pattern is recorded.

According to the first embodiment of the present disclosure, in the case where the photosensitive material sample on which the first holographic interference pattern is recorded has the shape of a curved surface, the photosensitive material on which the second holographic interference pattern is to be recorded may have the shape of a flat surface. As described above, in the case where the photosensitive material sample on which the first holographic interference pattern is recorded has the shape of a curved surface, the photosensitive material having the shape of a flat surface is used as the photosensitive material on which the second holographic interference pattern is to be recorded. Thus, although the reproduction light is emitted at the photosensitive material having the shape of a flat surface, the diffraction light that is to be diffracted in the photosensitive material having the shape of a curved surface may be realized.

According to the first embodiment of the present disclosure, in the case where the photosensitive material sample on which the first holographic interference pattern is recorded has the shape of a flat surface, the photosensitive material on which the second holographic interference pattern is to be recorded may have the shape of a curved surface. As described above, in the case where the photosensitive material sample on which the first holographic interference pattern is recorded has the shape of a flat surface, the photosensitive material having the shape of a curved surface is used as the photosensitive material on which the second holographic interference pattern is to be recorded. Thus, although the reproduction light is emitted at the photosensitive material having the shape of a curved surface, the diffraction light that is to be diffracted in the photosensitive material having the shape of a flat surface may be realized.

The method of recording a holographic interference pattern according to the first embodiment of the present disclosure includes Step S30 of arranging the optical paths 3' and 5' on the two-dimensional coordinate system by rotating the photosensitive material sample 1. That is, the method of recording a holographic interference pattern includes Step S30 of arranging a path for the reproduction light 3' and a path for the diffraction light 5' on the two-dimensional coordinate system by rotating the photosensitive material sample 1. Specifically, the method of recording a holographic interference pattern includes Step S30 of forming the origin O at which the path for the reproduction light 3 and the path for the diffraction light 5 meet with the photosensitive material sample 1 and of arranging a plane that is formed by the origin O, the path for the reproduction light 3, and the path for the diffraction light 5, on a plane of the two-dimensional coordinate system. As described above, the method of recording a holographic interference pattern includes Step S30 of arranging the optical paths 3' and 5' on the two-dimensional coordinate system by rotating the photosensitive material sample 1. Accordingly, the path for the reproduction light 3 and the path for the diffraction light 5 that are arranged in a space of a three-dimensional coordinate system may be simplified.

The method of recording a holographic interference pattern according to the first embodiment of the present disclosure includes Step S50 of deriving the path for the reference light 30 and the path for the object light 50 in such a manner as to record the second holographic interference pattern that realizes the optical paths that are the same as the optical paths 3' and 5' arranged on the two-dimensional coordinate system. Specifically, in a case where in the space of the three-dimensional coordinate system, the path for the reference light 30 and the path for the object light 50 are derived from the optical paths formed by the path for the reproduction light 3 and the path for the diffraction light 5, respectively, a complicated problem occurs in aligning the reference light and the object light. To deal with this problem, the method of recording a holographic interference pattern includes Step S50 of deriving each of the path for the reference light 30 and the path for the object light 50 in such a manner as to correspondingly record the second holographic interference pattern after identifying the diffraction light 5' that is diffracted in a case where the reproduction light 3' arranged on the two-dimensional coordinate system is emitted. As described above, the method of recording a holographic interference pattern includes Step S50 of deriving the path for the reference light 30 and the path for the object light 50 in such a manner as to record the second holographic interference pattern from the path for the reproduction light 3' and the path for the diffraction light 5' that are arranged in the two-dimensional coordinate system. Accordingly, in a case where the first holographic interference pattern is changed, the path for the reference light 30 and the path for the object light 50 may be changed through the above-described derivation step.

The method of recording a holographic interference pattern according to the first embodiment of the present disclosure includes Step S70 of providing the photosensitive material 10 on which the second holographic interference pattern is to be recorded, providing the reference light 30 and the object light 50 at predetermined positions 30s and 50s, respectively, on the path for the reference light 30 and the path for the object light 50, emitting the reference light and the object light, and thus recording the second holographic interference pattern. Specifically, the second holographic interference pattern may result from recording an interference pattern forming by an interference phenomenon that occurs by emitting the reference light 30 and the object light 50. Specifically, the reference light and the object light are emitted to the photosensitive material, and destructive interference and constructive interference are realized due to the phenomenon of the interference between the reference light and the object light. Thus, a portion of the photosensitive material in which the constructive interference is realized is further photopolymerized, and a portion thereof in which the destructive interference is realized is less photopolymerized than the portion thereof in which the constructive interference is realized. Accordingly, a density difference occurs in the photosensitive material. The photosensitive material in which the density difference occurs forms a pattern realized due to the interference phenomenon, and this pattern corresponds to the holographic interference pattern. As described above, the photosensitive material 10 on which the second holographic interference pattern is to be recorded is provided, and the reference light 30 and the object light 50 are provided at predetermined positions, respectively, on the path of the reference light 30 and the path for the object light 50 and are emitted. Thus, the second holographic interference pattern may be recorded, and the holographic interference pattern may be easily formed.

According to the first embodiment of the present disclosure, Step S30 of arranging the optical paths on the two-dimensional coordinate system may be to designate as the origin O a point at which the reproduction light 3' meets with a photosensitive material sample 1' on the two-dimensional coordinate system. Specifically, the reproduction light 3 is emitted, and the point at which the reproduction light meets with the photosensitive material sample 1 is designated as the origin O. The origin O may be arranged at the origin of the two-dimensional coordinate system. As described above, the point at which the reproduction light 3' meets with the photosensitive material sample 1' on the two-dimensional coordinate system is designated as the origin O, and the reproduction light and the photosensitive material sample are arranged on the two-dimensional coordinate system. Accordingly, an arrangement of the reference light 30, the object light 50, and the photosensitive material 10 may be simplified. Thus, in a case where the holographic interference pattern is changed, the arrangement thereof may be easily changed.

According to the first embodiment of the present disclosure, Step S70 of recording the second holographic interference pattern may be to provide a photosensitive material 10' on which the second holographic interference pattern is to be recorded, in such a manner that the photosensitive material 10' is aligned in the same manner as the photosensitive material sample 1' rotated for arrangement. Specifically, the arrangement of the reference light, the object light, and the photosensitive material on the three-dimensional coordinate system is changed to the arrangement thereof on the two-dimensional coordinate system. In a case where the holographic interference pattern that is to be realized by the reference light 30 and the object light 50 is recorded, the rotated photosensitive material 10' is arranged in the same manner as the photosensitive material sample 1' rotated for arrangement. Thus, the second holographic interference pattern that is to be recorded may be recorded.

An apparatus 1000 for recording a holographic interference pattern according to a second embodiment of the present disclosure includes: a photosensitive material fixation unit 100 configured to fix a photosensitive material 10' on which a second holographic interference pattern, realizing optical paths that are the same as optical paths realized by a first holographic interference pattern recorded on a photosensitive material sample 1, is to be recorded; a reference light emission unit 300 configured to emit reference light 30 to the photosensitive material 10'; an object light emission unit 500 configured to emit object light 50 to the photosensitive material 10'; a stage unit 700 to which the photosensitive material fixation unit 100, the reference light emission unit 300, and the object light emission unit 500 are fixed after being arranged at predetermined positions, respectively; and a computation unit 600 configured to derive the predetermined positions, wherein the second holographic interference pattern formed due to a phenomenon of interference between the reference light 30 and the object light 50 is recorded on the photosensitive material 10'.

Although the holographic interference pattern that is to be recorded is changed, the apparatus 1000 for recording a holographic interference pattern according to the second embodiment of the present disclosure may easily change the respective positions of the reference light 30, the object light 50, the photosensitive material 10' and thus may simplify a recording process.

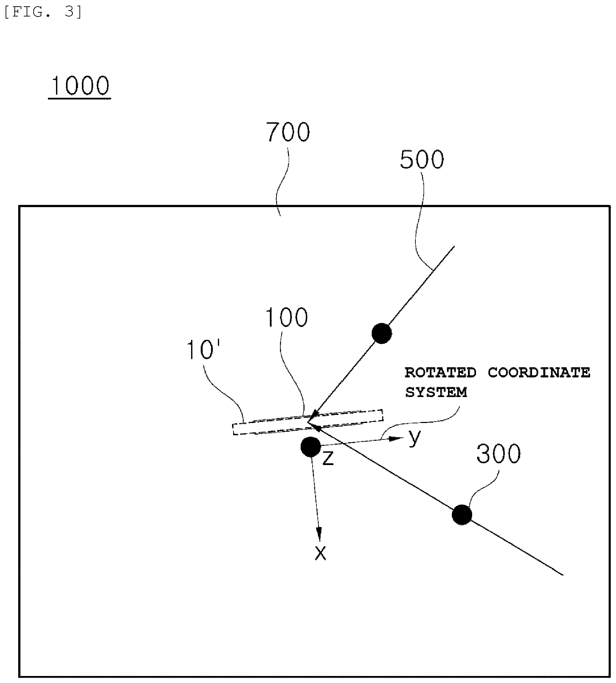

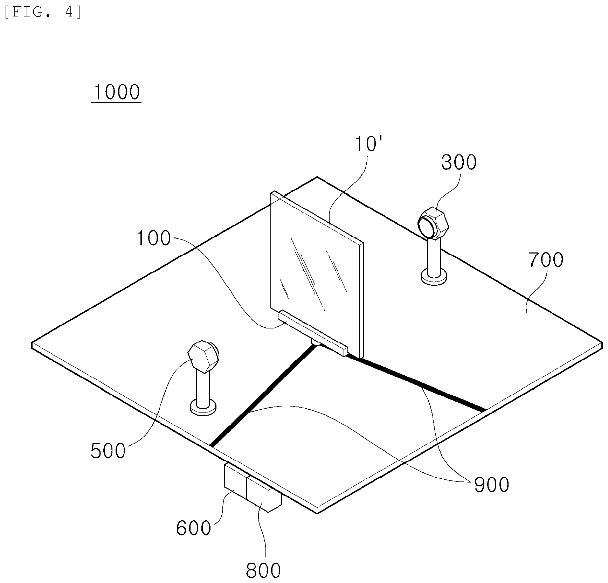

FIG. 3 is a plan view illustrating the apparatus 1000 for recording a holographic interference pattern according to the second embodiment of the present disclosure. FIG. 4 is a perspective view illustrating the apparatus 1000 for recording a holographic interference pattern according to the second embodiment of the present disclosure. The apparatus 1000 for recording a holographic interference pattern is described with reference to FIGS. 3 and 4.

The apparatus 1000 for recording a holographic interference pattern according to the second embodiment of the present disclosure includes the photosensitive material fixation unit 100 configured to fix the photosensitive material 10' on which the second holographic interference pattern, realizing the optical paths that are the same as the optical paths realized by the first holographic interference pattern recorded on the photosensitive material sample, is to be recorded. Specifically, the second holographic interference pattern realizes the optical paths that are the same as the optical paths formed by the path for the reproduction light and the path for the diffraction light that are realized by the first holographic interference pattern recorded on the photosensitive material sample 1. In order to record the second holographic interference pattern, the photosensitive material 10' may be fixed to the photosensitive material fixation unit 100. As described above, the apparatus for recording a holographic interference pattern includes the photosensitive material fixation unit 100 configured to fix the photosensitive material 10' on which the second holographic interference pattern, realizing the optical paths that are the same as the optical paths realized by the first holographic interference pattern, is to be recorded. Accordingly, the arrangement on the photosensitive material fixation unit 100 may be easily changed, and a movement of photosensitive material 10' may be minimized. Thus, the second holographic interference pattern may be accurately recorded.

The apparatus 1000 for recording a holographic interference pattern according to the second embodiment of the present disclosure includes the reference light emission unit 300 configured to emit the reference light 30 to the photosensitive material 10'. Specifically, the apparatus for recording a holographic interference pattern includes a light source configured to emit the reference light 30, that is, the reference light emission unit 300. The reference light emission unit emits the reference light to the photosensitive material 10', thereby causing interference with the object light 50. Thus, the second holographic interference pattern may be formed, and the position at which the reference light 30 is emitted may be easily changed. As described above, the apparatus for recording a holographic interference pattern includes the reference light emission unit 300 configured to emit the reference light 30 to the photosensitive material 10'. Accordingly, the position at which the reference light 30 is emitted may be easily changed, and a movement of the reference light emission unit 300 may be minimized. Thus, the second holographic interference pattern may be accurately recorded.

The apparatus 1000 for recording a holographic interference pattern according to the second embodiment of the present disclosure includes the object light emission unit 500 configured to emit the object light 50 to the photosensitive material 10'. Specifically, the apparatus for recording a holographic interference pattern includes a light source configured to emit the object light 50, that is, the object light emission unit 500. The object light emission unit is configured to emit the object light to the photosensitive material 10', thereby causing interference with the reference light 30. Thus, the second holographic interference pattern may be formed, and the position at which the object light 50 is emitted may be easily changed. As described above, the apparatus for recording a holographic interference pattern includes the object light emission unit 500 emitting the object light 50 to the photosensitive material 10'. Accordingly, the position at which the object light 50 is emitted may be easily changed, and a movement of the object light emission unit 500 may be minimized. Thus, the second holographic interference pattern may be accurately recorded.

The apparatus 1000 for recording a holographic interference pattern according to the second embodiment of the present disclosure includes the stage unit 700 to which the photosensitive material fixation unit 100, the reference light emission unit 300, and the object light emission unit 500 are fixed after being arranged at predetermined positions, respectively. Specifically, the photosensitive material fixation unit 100, the reference light emission unit 300, and the object light emission unit 500 may be fixed to the stage unit 700 after being aligned with the respective positions of the photosensitive material fixation unit 100, the reference light emission unit 300, and the object light emission unit 500 that are derived in the step of deriving the predetermined positions. The stage unit has a flat surface, and may easily arrange the photosensitive material fixation unit, the reference light emission unit, and the object light emission unit at the positions, respectively, that are derived for the two-dimensional coordinate system. In conjunction with a controller 800 described below, the stage unit 700 may easily arrange the photosensitive material fixation unit 100, the reference light emission unit 300, and the object light emission unit 500 at the respective positions thereof according to the second holographic interference pattern that is to be recorded. As described above, the apparatus for recording a holographic interference pattern includes the stage unit 700 to which the photosensitive material fixation unit 100, the reference light emission unit 300, and the object light emission unit 500 are fixed after being arranged at the positions thereof, respectively. Accordingly, the photosensitive material fixation unit, the reference light emission unit, and the object light emission unit may be easily arranged according to the second holographic interference pattern that is to be recorded.

The apparatus for recording a holographic interference pattern according to the second embodiment of the present disclosure includes the computation unit 600 configured to derive the predetermined positions. Specifically, the computation unit 600 may derive the path for the reference light 30 and the path for the object light 50 that are capable of recording the holographic interference pattern realizing the diffraction light 5 in such a manner as to be diffracted when the reproduction light 3 is emitted to the photosensitive material sample 1, and may derive the paths for the reference light 30 and the object light 50 on the two-dimensional coordinate system to which the reproduction light 3 and the diffraction light 5, respectively, correspond two-dimensionally. As described above, the apparatus for recording a holographic interference pattern includes the computation unit 600 configured to derive the predetermined positions. Accordingly, the arrangement of the reproduction light 3 and the diffraction light 5 in the space of the three-dimensional coordinate system can be easily converted into an arrangement thereof on the plane of the two-dimensional coordinate system. The path for the reproduction light 3' and the path for the diffraction light 5' that result from the conversion may be converted into the path for the reference light 30 and the path for the object light 50 that correspond thereto, respectively.

The apparatus 1000 for recording a holographic interference pattern according to the second embodiment of the present disclosure records the second holographic interference pattern, formed due to the phenomenon of the interference between the reference light 30 and the object light 50, on the photosensitive material for duplicating thereto. Specifically, the reference light and the object light are emitted to the photosensitive material, and the destructive interference and the constructive interference are realized due to the phenomenon of the interference between the reference light and the object light. Thus, a portion of the photosensitive material in which the constructive interference is realized is further photopolymerized, and a portion thereof in which the destructive interference is realized is less photopolymerized than the portion thereof in which the constructive interference occurs. Accordingly, the density difference occurs in the photosensitive material. The photosensitive material in which the density difference occurs forms a pattern realized by the interference phenomenon, and this pattern corresponds to the holographic interference pattern. As described above, the photosensitive material on which the holographic interference pattern is to be recorded is provided, and the reference light and the object light are provided at predetermined positions, respectively, on the path for the reference light and the path for the object light and are emitted. Accordingly, the second holographic interference pattern may be recorded, and thus, the holographic interference pattern can be easily formed.

According to the second embodiment of the present disclosure, the computation unit 600 may derive the predetermined positions by performing Step S10 of identifying optical paths formed by a path for reproduction light 3 and a path for diffraction light 5, respectively, by emitting at a predetermined position 3s the reproduction light 3 to a photosensitive material sample 1 on which a first holographic interference pattern is recorded; Step S30 of arranging the optical paths 3' and 5' on a two-dimensional coordinate system by rotating the photosensitive material sample 1; and Step S50 of deriving a path for the reference light 30 and a path for the object light 50 in such a manner as to record a second holographic interference pattern that realizes optical paths that are the same as the optical paths 3' and 5' arranged on the two-dimensional coordinate system. As described above, the computation unit 600 performs Step S10 of identifying the optical paths, Step S30 of arranging the optical paths on the two-dimensional coordinate system, and Step S50 of deriving the path for the reference light and the path for the object light. The path for the reference light 30 and the path for the object light 50 that are converted for the two-dimensional coordinate system may be easily derived. Although the holographic interference pattern that is to be recorded is changed, the path for the reference light 30 and the path for the object light 50 may be easily derived.

The computation unit 600 according to the second embodiment of the present disclosure performs Step S10 of identifying optical paths formed by the path for the reproduction light 3 and the path for the diffraction light 5, respectively, by emitting at the predetermined position 3s the reproduction light 3 to the photosensitive material sample 1 on which the first holographic interference pattern is recorded. That is, the computation unit performs the step of identifying the path for the diffraction light 5 by emitting at the predetermined position 3s the reproduction light 3 to the photosensitive material sample 1 on which the holographic interference pattern is recorded. Specifically, the reproduction light 3 is positioned at a starting point 3s of the reproduction light, that is, the predetermined position, and is emitted to the photosensitive material sample 1. The path for the diffraction light 5 that is diffracted by the holographic interference pattern recorded on the photosensitive material sample 1 is identified. As described above, the computation unit performs Step S10 of identifying the optical paths formed by the path for the reproduction light 3 and the path for the diffraction light 5, respectively, by emitting at the predetermined position 3s the reproduction light 3 to the photosensitive material sample 1 on which the first holographic interference pattern is recorded. Thus, the corresponding path for the objection light 50 and the correspond path for the reference light 30 may be identified in order to record the holographic interference pattern. Accordingly, a starting point 50s of the object light and a starting point 30s of the reference light may be identified.

The computation unit 600 according to the second embodiment of the present disclosure performs Step S30 of arranging the optical paths 3' and 5' on the two-dimensional coordinate system by rotating the photosensitive material sample 1. That is, the computation unit 600 performs Step S30 of arranging the path for the reproduction light 3 and the path for the diffraction light 5 on the two-dimensional coordinate system by rotating the photosensitive material sample 1. Specifically, the computation unit performs Step S30 of forming the origin O at which the path for the reproduction light 3 and the path for the diffraction light 5 meet with the photosensitive material sample 1 and of arranging a plane that is formed by the origin O, the path for the reproduction light 3', and the path for the diffraction light 5', on a plane of the two-dimensional coordinate system. As described above, the computation unit performs Step S30 of arranging the optical paths, formed by the path for the reproduction light 3' and the path for the diffraction light 5', on the two-dimensional coordinate system by rotating the photosensitive material sample 1'. Thus, the path for the reproduction light 3 and the path for the diffraction light 5 that are arranged in the space of the three-dimensional coordinate system may be simplified.

The computation unit 600 according to the second embodiment of the present disclosure performs S50 of deriving the path for the reference light 30 and the path for the object light 50 in such a manner as to record the second holographic interference pattern that realizes the optical paths that are the same as the optical paths 3' and 5' arranged on the two-dimensional coordinate system. The computation unit 600 performs S50 of deriving the path for the reference light 30 and the path for the object light 50 in such a manner as to record the second holographic interference pattern that realizes the optical paths that are the same as the optical paths 3' and 5' arranged on the two-dimensional coordinate system. Specifically, in a case where in the space of the three-dimensional coordinate system, the path for the reference light and the path for the object light are derived from the path for the reproduction light 3 and the path for diffraction light 5, respectively, a complicated problem occurs in aligning the reference light and the object light. To deal with this problem, The computation unit performs Step S50 of deriving each of the path for the reference light 30 and the path for the object light 50 in such a manner as to correspondingly record the second holographic interference pattern after identifying the diffraction light 5' that is diffracted in a case where the reproduction light 3' arranged on the two-dimensional coordinate system is emitted. As described above, the computation unit performs Step S50 of deriving the path for the reference light 30 and the path for the object light 50 in such a manner as to record the second holographic interference pattern from the path for the reproduction light 3' and the path for the diffraction light 5' that are arranged in the two-dimensional coordinate system. Accordingly, in the case where the first holographic interference pattern is changed, the path for the reference light 30 and the path for the object light 50 may be changed through the step of deriving the predetermined positions.

The photosensitive material fixation unit 100 according to the second embodiment of the present disclosure may rotate the photosensitive material 10' in such a manner that the photosensitive material 10' is aligned in the same manner as the photosensitive material sample 1' rotated for arrangement. Specifically, when the reproduction light 3 and the diffraction light 5 are converted for the two-dimensional coordinate system and the photosensitive material sample 1' is rotated, the photosensitive material 10' is arranged in the same manner as the photosensitive material sample. Accordingly, the second holographic interference pattern that is to be recorded or duplicated may be recorded, and the diffraction light 5' that is diffracted at a specific angle by emitting the predetermined reproduction light 3' may be realized.

The apparatus for recording a holographic interference pattern according to the second embodiment of the present disclosure may further include the controller 800 connected to each of the photosensitive material fixation unit 100, the reference light emission unit 300, and the object light emission unit 500 and configured to move each of the photosensitive material fixation unit, the reference light emission unit, and the object light emission unit in such a manner as to be arranged at the predetermined positions, respectively. Specifically, in a case where the holographic interference pattern that is to be recorded is changed, the controller 800 may move the reference light emission unit 300 and the object light emission unit 500 in such a manner as to be positioned on the path for the reference light 30 and the path for the object light 50 that are derived by the computation unit 600. Moreover, the controller 800 may also move the photosensitive material fixation unit 100 in such a manner that the origin O is positioned at the origin of the two-dimensional coordinate system. As described above, the controller 800 controls a position of each of the photosensitive material fixation unit 100, the reference light emission unit 300, and the object light emission unit 500. Thus, the accurate alignment can be realized, and the accuracy of the holographic interference pattern can be improved.

The stage unit 700 according to the second embodiment of the present disclosure may include a marker 900 on which the path for the reproduction light 3' and the path for the diffraction light 5' are each marked. As described above, the stage unit 700 further includes the marker 900 on which the path for the reproduction light 3' and the path for the diffraction light 5', that is, the optical paths are marked. Thus, the path for the reference light 30, the path for the object light 50, the path for the reproduction light 3' and the path for the diffraction light 5' may be identified. Accordingly, a relationship among these paths may be recognized, and thus the holograph interference pattern that is to be recorded or duplicated may be accurately realized.

A limited number of embodiments of the present disclosure are described above. However, the present disclosure is not limited to these embodiments. Of course, it would be apparent to a person of ordinary skill in the art to which the present disclosure pertains that various modifications and alterations are possibly made to the embodiments of the present disclosure within the scope of the technical idea of the present disclosure and within the scope of the present disclosure that is defined in the following claims and the scope equivalent thereto.

## Claims

1. A method of recording a holographic interference pattern, the method comprising:
identifying optical paths formed by a path for reproduction light and a path for diffraction light, respectively, by emitting the reproduction light at a predetermined position to a photosensitive material sample on which a first holographic interference pattern is recorded;
arranging the optical paths on a two-dimensional coordinate system by rotating the photosensitive material sample;
deriving a path for reference light and a path for object light in such a manner as to record a second holographic interference pattern that realizes optical paths that are the same as the optical paths arranged on the two-dimensional coordinate system, and
providing a photosensitive material on which the second holographic interference pattern is to be recorded, providing the reference light and the object light at predetermined positions, respectively, on the path for the reference light and the path for the object light, emitting the reference light and the object light, and thus recording the second holographic interference pattern.

2. The method of claim 1, wherein the arranging of the optical paths on the two-dimensional coordinate system is to designate as the origin a point where the reproduction light meets with the photosensitive material sample on the two-dimensional coordinate system.

3. The method of 1, wherein the recording of the second holographic interference pattern is to provide the photosensitive material on which the second holographic interference pattern is to be recorded, in such a manner that the photosensitive material is aligned in the same manner as the photosensitive material sample rotated for arrangement.

4. An apparatus for recording a holographic interference pattern, the apparatus comprising:
a photosensitive material fixation unit configured to fix a photosensitive material on which a second holographic interference pattern, realizing optical paths that are the same as optical paths realized by a first holographic interference pattern recorded on a photosensitive material sample, is to be recorded;
a reference light emission unit configured to emit reference light to the photosensitive material;
an object light emission unit configured to emit object light to the photosensitive material;
a stage unit to which the photosensitive material fixation unit, the reference light emission unit, and the object light emission unit are fixed after being arranged at predetermined positions, respectively; and
a computation unit configured to derive the predetermined positions,
wherein the second holographic interference pattern formed due to a phenomenon of interference between the reference light and the object light is recorded on the photosensitive material.

5. The apparatus of claim 4, wherein the computation unit derives the predetermined positions by performing:
emitting at a predetermined position reproduction light to the photosensitive material sample on which the first holographic interference pattern is recorded and thus identifying optical paths formed by a path for the reproduction light and a path for diffraction light;
arranging the optical paths on a two-dimensional coordinate system by rotating the photosensitive material sample; and
deriving a path for the reference light and a path for the object light in such a manner as to record the second holographic interference pattern realizing optical paths that are the same as the optical paths arranged on the two-dimensional coordinate system.

6. The apparatus of claim 5, wherein the photosensitive material fixation unit rotates the photosensitive material in such a manner that the photosensitive material is aligned in the same manner as the photosensitive material sample rotated for arrangement.

7. The apparatus of claim 5, further comprising:
a controller connected to each of the photosensitive material fixation unit, the reference light emission unit, and the object light emission unit and configured to move each of the photosensitive material fixation unit, the reference light emission unit, and the object light emission unit in such a manner as to be arranged at the predetermined positions, respectively.

8. The apparatus of claim 5, wherein the stage unit comprises:
a marker on which the path for the reproduction light and the path for the diffraction light are each marked.
